**Europäisches Patentamt**

**European Patent Office**

**Office européen des brevets**

(19)

(11) Publication number : **0 357 772 B1**

# EUROPEAN PATENT SPECIFICATION

(12)

(45) Date of publication of patent specification :
**20.05.92 Bulletin 92/21**

(51) Int. Cl.$^5$ : **B23F 21/16**

(21) Application number : **87905803.0**

(22) Date of filing : **14.09.87**

(86) International application number :
**PCT/JP87/00678**

(87) International publication number :
**WO 89/02330 23.03.89 Gazette 89/07**

(54) **HOB CUTTER FOR CUTTING INVOLUTE GEAR.**

(43) Date of publication of application :
**14.03.90 Bulletin 90/11**

(45) Publication of the grant of the patent :
**20.05.92 Bulletin 92/21**

(84) Designated Contracting States :
**AT BE CH DE FR GB IT LI LU NL SE**

(56) References cited :
**JP-A-51 131 976**
**JP-B- 5 616 006**
**PATENT ABSTRACTS OF JAPAN, vol. 12, no.**
**67 (M-673)[2914], 2nd March 1988; & JP-A-62**
**213 919 (SHIGEYOSHI OSADA) 19-09-1987**

(56) References cited :
**PATENT ABSTRACTS OF JAPAN, vol. 1, no.**
**105 (M-036), 16th September 1977; & JP-A-52**
**44 497 (MITSUBISHI JUKOGYO K.K.)07-**
**04-1977**
**PATENT ABSTRACTS OF JAPAN, vol. 2, no. 12**
**(M-004), 27th January 1978; & JP-A-52 126 596**
**(MITSUBISHI JUKOGYO K.K.)24-10-1977**

(73) Proprietor : **NAGATA, Shigeyoshi**
**17-5, Mejiro 3-chome**
**Toshima-ku, Tokyo 171 (JP)**

(72) Inventor : **NAGATA, Shigeyoshi**
**17-5, Mejiro 3-chome**
**Toshima-ku, Tokyo 171 (JP)**

(74) Representative : **Blatchford, William Michael et al**
**Withers & Rogers 4 Dyer's Buildings Holborn**
**London EC1N 2JT (GB)**

Jouve, 18, rue Saint-Denis, 75001 PARIS

EP 0 357 772 B1

## Description

The present invention relates according to the precharacterising part of the claim to a hob cutter for cutting gears, particularly to a hob cutter for cutting an involute gear and at the same time for chamfering its addendum; see Patent Abstracts of Japan, vol. 2, No. 12 (140041, 27.01.78; 8 JP-A-52 126 596.

## Background Art

In a conventional design of a hob cutter with a chamfered portion, a pressure angle of a rack teeth-profile (hob teeth-profile) for cutting a first involute gear is the same as a nominal pressure angle of a gear to be formed or is minus-shifted for pre-shaving. In these cases, the relation between a number of teeth of the gear to be cut and chamfering values varies monotonously and continuously, and a rate of such variation is relatively large in particular where the number of teeth is smaller.

In other words, using a hob cutter designed for a particular number of teeth, when a gear of a teeth number more than said particular number is cut, the chamfering value will increase, on the other hand, if a gear of a teeth number less than said particular number is cut with the same hob cutter, the chamfering value will decrease or any chamfering will not appear at all.

Accordingly, hethertofore, several different hob cutters had to be prepared according to the number of teeth to be cut in order to make an appropriate chamfering during the machining of the gear.

## Disclosure of the Invention

It is an object of the present invention to overcome the above-described disadvantages of the prior art and to provide such a hob cutter for cutting involute gears that all gears of a normal range of teeth number can be chamfered by a single hob cutter.

The above-described object can be achieved by a hob cutter having the features of the claim. Said hob cutter comprising a cutting edge consisting of a first rack teeth profile portion for cutting a main teeth profile portion and a second rack teeth profile portion for chamfering an addendum portion, characterizing in that a presusure angle $\alpha_1$, of said first rack teeth profile portion is larger than a pressure angle $\alpha_0$ of a gear to be cut, that a pressure angle $\alpha_2$ of said second rack teeth profile portion is smaller than a pressure angle $\alpha_0$ of a pitch circle diameter (PCD) of a second involute in the chamfered portion of the gear, and that the above-mentioned factors are determined so as to satisfy the following formula:

$$m \cos \alpha_0 = M \cos \alpha_1$$

where, M is a module of said hob cutter, and
m is a module of the gear to be cut.

## Brief Description of the Drawings

Fig 1 is a partial enlarged sectional view of one embodiment of a hob cutter for cutting involute gears according to the present invention, showing the structure of the tooth portion;
Fig 2 is a partial enlarged sectional view showing an example of prior art hob cutters;
Fig 3 is a graph showing a relation between the number of teeth and chamfering values in the hob cutter according to the present invention, and a relation between the number of teeth and chamfering values in the prior art hob cutter, respectively;
Fig 4 is a graph showing a relation between the number of teeth and chamfering values of a gear of module m = 4, pressure angle $\alpha_0 = 20°$ .

## Preferred Embodiment of the Invention

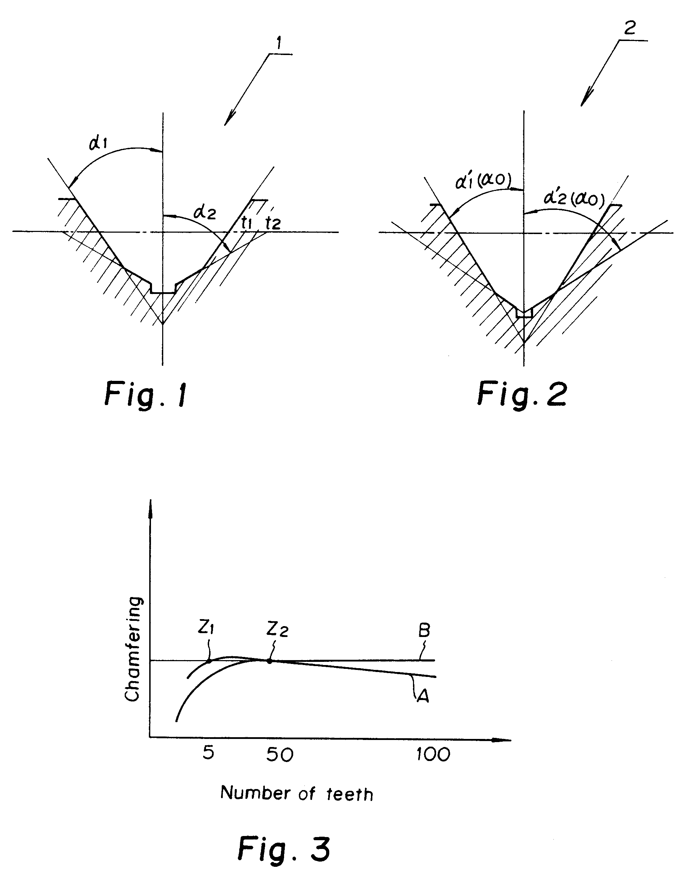

First, Fig 1, Fig 2, and Fig 3 will be explained below. In Fig 1, Fig 2, and Fig 3, $\alpha_1$ is a pressure angle of a first rack teeth profile portion of a hob cutter for cutting involute gears according to the present invention, $\alpha_1'$ is a pressure angle of a first rack teeth profile portion of the prior art hob cutter, $\alpha_0$ is a pressure angle of a gear to be cut, $\alpha_2$ is a pressure angle of a second rack teeth profile purtion in the hob cutter according to the present invention $\alpha_2'$ is a pressure angle of a second rack teeth profile portion of the prior art hob cutter, and $\alpha_0$ is a pressure angle of the chamfered portion of the gear.

In the hob cutter for cutting involute gears according to the present invention, the pressure angle $\alpha_1$ of the first rack teeth profile portion of the hob cutter is larger than the pressure angle $\alpha_0$ of the gear to be cut, and generally, the pressure angle $\alpha_2$ the of second rack teeth profile portion is also smaller than the pressure angle $\alpha_2'$ of the chamfered portion of the gear, and each values are determined so as to satisfy the following formula:

$$m \cos \alpha_0 = M \cos \alpha_1$$

where, M is module of the hob cutter, and
m is a module of the gear to be cut.

On the other hand, the prior art hob cutter was formed in such a manner that the pressure angle $\alpha_1'$ of the first rack teeth profile portion of the prior art hob cutter is equal to the pressure angle $\alpha_0$ of the gear to be cut, and the pressure angle $\alpha_2'$ of the second rack teeth profile portion is also equal to the pressure angle $\alpha_0$ on the pitch circle diameter (PCD)of the second involute curve of the chamfered portion of the gear. Accordingly, the relation between the number of teeth of the gear to be cut and chamfered values becomes a monotonously increasing function as shown in Fig 3, and therefore the prior art hob cutter can not make the chamfering of good quality except when the hob cutter in accommodation with the number of teeth of the gear to be cut is used. If the prior art hob cutter is not accommodated with the gear to be formed, the chamfered values can be excessively large or small or the chamfering can not make at all.

According to the present invention, however, as described above, the relation between the chamfering values and the number of teeth becomes to have an extremal value, and therefore as shown by curve A in Fig 3, generally a single type of the hob cutter can chamfer almost all teeth number of gears.

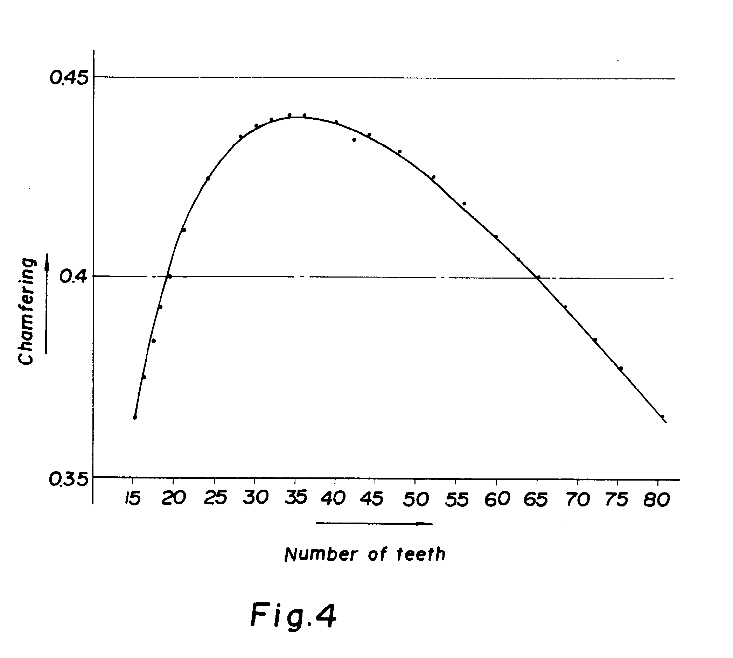

Referring now to Fig 4, Fig 4 shows the relation between the number of teeth and the chamfering values for the gear having module m = 4, the pressure angle $\alpha_0$ = 20° , the axis of ordinate represents the chamfering, and the abscissa represents the number of teeth.

In this example, a single hob cutter can chamfer gears having the number of teeth in the range of 15~80 while the chamfering values being within ± 10% of the standard value i.e. ±0.05 mm. Such extent of error is within an allowable range. Also, in this example, when the number of teeth is 19 and 65, the chamfering value corresponds with the standard value. In this way, according to the present invention, a single hob cutter can be used over a wide range of the number of teeth.
2n

Industrial Applicability

When the hob cutter according to the present invention is used to cut the gear, the relation between the chamfering values and the number of teeth is not a monotonously increasing function, but has one maximal value, and the same chamfering value can be obtained for two different number of teeth Z1, Z2, therefore the range of the number of teeth which can be cut by means of a single hob cutter is extermely large, and generally a single type of the hob cutter is sufficient to cut almost all gears.

**Claims**

1. A hob cutter for cutting involute gears, said hob cutter having a cutting edge consisting of a first rack teeth profile portion for cutting a main teeth profile and a second rack teeth profile portion for chamfering an addendum portion, characterized in that a pressure angle ($\alpha_1$) and module (M) of a teeth profile of a rack for cutting a first involute teeth profile are different from a nominal pressure angle ($\alpha_0$) and a nominal module (m) of the gear to be cut, respectively, so that the equation m·cos$\alpha_0$ = M·cos$\alpha_1$ is met, resulting in a shifted rack teeth profile, whereby a characteristic curve showing a relation between a number of teeth and chamfering values having an extremal value with a variation of the chamfering values being minimal.

**Revendications**

1. Machine à tailler les engrenages par génération pour le taillage d'engrenages à développante, cette machine à tailler les engrenages comportant un bord de coupe constitué d'une première partie de profil de dents de crémaillère destinée à tailler un profil de dents principal, et d'une seconde partie de profil de dents de crémaillère destinée à chanfreiner une partie de complément, machine caractérisée en ce que l'angle de poussée ($\alpha_1$) et le module (M) d'un profil de dents d'une crémaillère pour tailler un premier profil de dents à développante, sont respectivement différents d'un angle de poussée nominal ($\alpha_0$) et d'un module nominal (m) de l'engrenage à tailler, de façon que l'équation m cos $\alpha_0$ = M cos $\alpha_1$ soit satisfaisante en donnant un profil de dents de crémaillère décalé, de sorte que la courbe caractéristique représentant la relation entre le nombre de dents et les valeurs de chanfreinage présente une valeur extrême tandis que la variation des valeurs de chanfreinage est minimale.

**Patentansprüche**

1. Wälzfräser für das Schneiden von Evolventen-Zahnrädern, wobei der Wälzfräser eine Schneidkante hat, die einen ersten Zahnungsprofilteil zum Schneiden eines Hauptzahnprofils und einen zweiten Zahnungsprofilteil zum Abschrägen eines Kopfteiles aufweist, dadurch gekennzeichnet, daß Eingriffs-oder Druckwinkel ($\alpha_1$) und Modul (M) des Zahnprofils eines Zahnungsteiles zum Schneiden eines ersten Evolventen-Zahnprofils jeweils unterschiedlich zum Nenn-Eingriffswinkel ($\alpha_0$) und Nennmodel (m) des zu schneidenden Zahnes sind, so daß die Gleichung (m) - cos $\alpha_0$ = m · cos $\alpha_1$ erfüllt ist, was zu einem verschobenen Zahnungsprofil führt, wobei eine charakteristische Kurve eine Beziehung zwischen Zähnezahl und Abschrägungswerten zeigt, welche einen Extremwert bei sich minimal verändernden Abschrägungswerten hat.

Fig. 1

Fig. 2

Number of teeth

Fig. 3

4

Number of teeth

Fig.4